# EUROPEAN PATENT APPLICATION

(11) **EP 1 369 070 A2**
(43) Date of publication of application: **10.12.2003**
(21) Application number: 03425355.9
(22) Date of filing: 04.06.2003
(51) Int. Cl.: A47J 31/24, A47J 31/46

(54) **Coffee machine and revelant valve**

(30) Priority: 05.06.2002 IT MI20021224
(71) Applicant: Atzori, Bruno, 13855 Valdengo BI (IT)
(72) Inventor: Atzori, Bruno, 13855 Valdengo BI (IT)
(74) Representative: Pizzoli, Antonio

(57) **Abstract**

Coffee machine comprising a boiler (1) for heating water coming from a pump (2) and for obtaining hot water and/or steam to be sent to at least one housing (3) suitable for containing ground coffee, wherein the pump (2) draws the water for the boiler (1) from a duct (4) connected to a mouth (5) provided with a seat (6) suitable for housing a bottle (7) or a similar vessel, so that its content can flow into this duct (4) through this mouth (5).

## Description

The present invention relates to a coffee machine, and in particular to a coffee machine which can draw water for making coffee from a common bottle of water. The present invention also relates to a valve suitable for being applied to this bottle before use.

The known coffee machines, for instance from EP-A-1147730, comprise a boiler for heating the water coming from a pump and for obtaining hot water and/or steam to be sent to at least one housing suitable for containing ground coffee. For this purpose, the pump is connected to an inner tank filled with water. However, after some time, this tank may gather limestone, bacteria, moulds or other deposits, which negatively modify the coffee taste, besides being unhygienic.

It is therefore an object of the present invention to provide a coffee machine which is free from said disadvantages. Said object is achieved with a coffee machine and a valve, the main features of which are disclosed in claims 1 and 6, respectively, while other features are disclosed in the remaining claims.

Thanks to the mouth and the seat for a bottle or a similar vessel, the coffee machine according to the present invention does not require a water tank, but can employ the common plastic or glass bottles containing mineral water, preferably upturned. Once emptied, these bottles can be substituted with other bottles full of water, so that there is no disadvantageous water stagnation. Furthermore, the coffee machine according to the present invention is less cumbersome and expensive than the known coffee machines, since it is devoid of a tank.

According to a particular advantageous aspect of the invention, the bottles of water can be provided before use with reusable valves which prevent the water leaking when they are turned upside down for being inserted in the relevant seat of the coffee machine. With this arrangement, more bottles provided with this valve and containing different kinds of water to be employed according to the coffee type required by the consumer can be prearranged.

According to another particular advantageous aspect of the invention, these valves are provided with coupling means not only for glass bottles, but also for plastic bottles, which are generally provided with a threaded neck.

Further advantages and features of the coffee machine and the valve according to the present invention will become evident to those skilled in the art from the following detailed and non-limiting description of some embodiment thereof with reference to the attached drawings, wherein:
- figure 1 shows a side view of the coffee machine according to the present invention;
- figure 2 shows a partial and enlarged cross-sectioned view of the coffee machine of figure 1;
- figure 3 shows a cross-sectioned side view of a valve according to a first embodiment of the present invention;
- figure 4 shows a bottom view of the valve of figure 3; and
- figure 5 shows a cross-sectioned side view of a valve according to a second embodiment of the present invention.

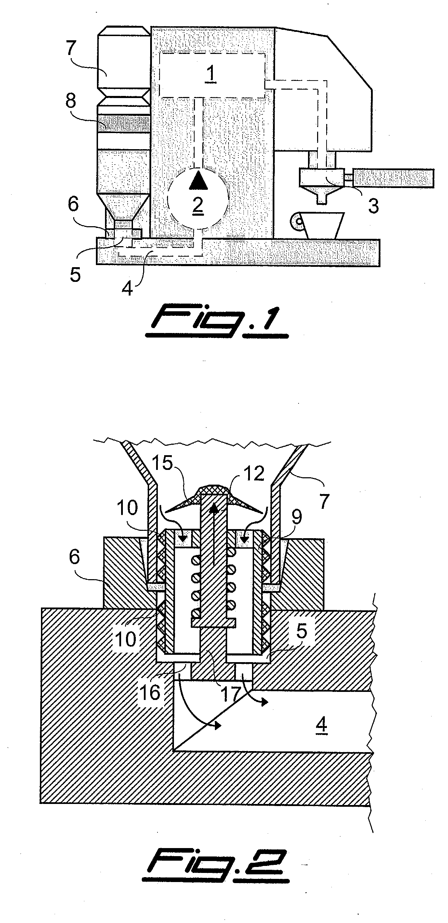

Referring to figure 1, it is seen that the coffee machine according to the present embodiment of the invention comprises in a known way a boiler 1 for heating water coming from a pump 2, so as to obtain hot water and/or steam to be sent to at least one housing 3 suitable for containing ground coffee.

According to the invention, pump 2 draws water for boiler 1 from a duct 4 connected to a mouth 5 provided with a seat 6 suitable for housing a bottle 7 or a similar vessel, preferably in an upturned position, so as to draw its content. For this purpose, the coffee machine is provided with means of keeping bottle 7 upturned on said seat 6, for example a ring 8 in which the same bottle is arranged.

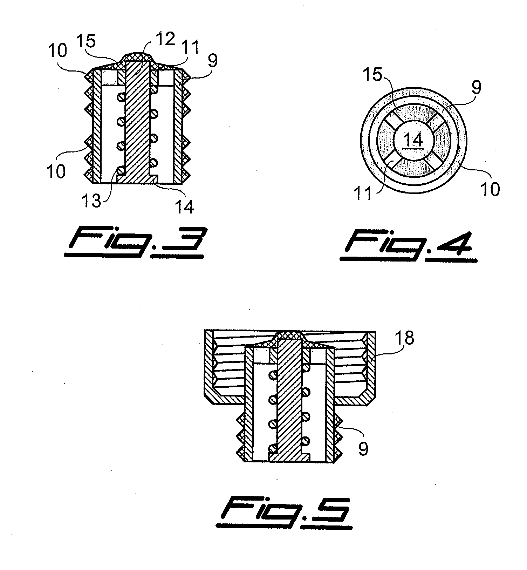

With reference to figure 2, it is seen that the neck of bottle 7 is preferably provided with a valve for avoiding to pour out its content when it is inserted into seat 6. Said valve comprises a tube 9, in particular having a cylindrical shape, which is provided with coupling means with the neck of bottle 7 and/or with the inner surface of mouth 5. In the present embodiment of the invention these coupling means comprise two series of annular elastomeric washers 10 fixed around the outer surface of tube 9. Washers 10 urge against the inner surfaces of the neck of bottle 7 and of mouth 5, so as to keep tube 9 in its position and prevent the liquid leaking in the interspace comprised between tube 9, the neck of bottle 7 and mouth 5.

Referring now also to figures 3 and 4, it is seen that a transversal member 11 is arranged in tube 9 and is provided with a plurality of radial openings and with a central hole in which a mobile member can run, in particular a rod 12 urged downwards by a helical spring 13 which is arranged in a coaxial way around rod 12 and is comprised between the transversal member 11 and an annular protrusion 14 at an end of rod 12. The opposite end of rod 12 is provided with a shutter, in particular a circular elastomeric cap 15 suitable for closing the radial openings of the transversal member 11 when rod 12 is urged downwards by spring 13.

Mouth 5 of the coffee machine according to the present invention comprises a transversal member 16 provided with a plurality of radial openings, as well as with a central pin 17 which protrudes in mouth 5 for urging upwards rod 12 when bottle 7, already provided with the valve, is inserted into seat 6. Thus, cap 15 lifts, thereby freeing the opening of the transversal member, so that the water contained in bottle 7 can flow into duct 4 toward pump 2, as indicated by the arrows of figure 2.

With reference to figure 5, it is seen that in a second embodiment of the valve according to the present invention, the coupling means of tube 9 with the neck of bottle 7 comprise a cylindrical member 18 which is internally threaded and is provided with a base crossed by tube 9 in a coaxial manner. With this arrangement, the valve can be screwed onto the threaded neck which is generally present in the plastic bottles. Obviously, in other embodiments of the valve also the coupling with mouth 5 can be carried out by means of threaded members.

## Claims

1. Coffee machine comprising a boiler (1) for heating water coming from a pump (2) and for obtaining hot water and/or steam to be sent to at least one housing (3) suitable for containing ground coffee, **characterized in that** the pump (2) draws the water for the boiler (1) from a duct (4) connected to a mouth (5) provided with a seat (6) suitable for housing a bottle (7) or a similar vessel, so that its content can flow into this duct (4) through this mouth (5).

2. Coffee machine according to the previous claim, **characterized in that** said seat (6) is suitable for housing the neck of a bottle (7) in an upturned position.

3. Coffee machine according to the claim 2, **characterized by** comprising means (8) for keeping the bottle (7) upturned on said seat (6).

4. Coffee machine according to one of the previous claims, **characterized in that** said mouth (5) comprises one or more members (16, 17) suitable for opening a valve (9, 12, 15) inserted into the neck of the bottle (7) when the latter is arranged into the relevant seat (6).

5. Coffee machine according to the previous claim, **characterized in that** said members (16, 17) suitable for opening the valve (9, 12, 15) comprise a pin (17) protruding in the mouth (5).

6. Valve suitable for being inserted into the neck of the bottle (7) to be arranged in the relevant seat (6) of the coffee machine according to one of the previous claims, **characterized by** comprising a tube (9) provided with coupling means (10; 18) with the neck of the bottle and/or with the inner surface of the mouth (5) of the coffee machine, as well as at least one mobile member (12) provided with a shutter (15) suitable for opening or closing said tube (9).

7. Valve according to claim 6, **characterized in that** said coupling means (10; 18) comprise at least one series of annular elastomeric washers (10) fixed around the outer surface of the tube (9).

8. Valve according to claim 6 or 7, **characterized in that** said coupling means (10; 18) comprise at least one cylindrical member (18) which is internally threaded and is provided with a base crossed by the tube (9).

9. Valve according to claim 8, **characterized in that** the tube (9) is arranged in a coaxial manner in said cylindrical member (18).

10. Valve according to one of claims 6 to 9, **characterized in that** a transversal member (11) is arranged in the tube (9) and is provided with a plurality of radial openings and with a central hole in which a rod (12) can run urged by a helical spring (13) which is arranged in a coaxial way around the rod (12) and is comprised between the transversal member (11) and an annular protrusion (14) at an end of the rod (12), the opposite end of the rod (12) being provided with a circular cap (15) suitable for closing the openings of the transversal member (11) when the rod (12) is urged by the spring (13).
